**Europäisches Patentamt**

**European Patent Office**

**Office européen des brevets**

(11) Veröffentlichungsnummer: **0 256 416**
**B1**

# (12) EUROPÄISCHE PATENTSCHRIFT

(45) Veröffentlichungstag der Patentschrift:
12.07.89

(51) Int. Cl.⁴: **F01N 3/28**

(21) Anmeldenummer: **87111224.9**

(22) Anmeldetag: **04.08.87**

(54) Abgasreinigungsvorrichtung.

(30) Priorität: 07.08.86 DE 3626729
07.08.86 DE 3626728
07.11.86 DE 3638049

(43) Veröffentlichungstag der Anmeldung:
24.02.88 Patentblatt 88/8

(45) Bekanntmachung des Hinweises auf die Patenterteilung:
12.07.89 Patentblatt 89/28

(84) Benannte Vertragsstaaten:
AT DE ES FR GB IT SE

(56) Entgegenhaltungen:
EP-A- 0 030 123
EP-A- 0 219 636
DE-A- 2 364 425
DE-A- 3 402 916
DE-A- 3 531 807

(73) Patentinhaber: **Leistritz Aktiengesellschaft,
Markgrafenstrasse 29-39, D-8500 Nürnberg(DE)**

(72) Erfinder: **Zachmann, Alfons, Dr.,
Konrad-Adenauer-Strasse 21, D-8510 Fürth(DE)**
Erfinder: **Stoepler, Walter, Dr., Daimlerstrasse 9,
D-8522 Herzogenaurach(DE)**
Erfinder: **Böhmer, Axel, Dipl.-Ing., Bismarckstrasse 21,
D-8500 Nürnberg(DE)**
Erfinder: **Sagitzki, Manfred, Veillodter Strasse 26,
D-8500 Nürnberg(DE)**

(74) Vertreter: **Czowalla . Matschkur Patentanwälte,
Dr.-Kurt-Schumacher-Strasse 23 Postfach 9109,
D-8500 Nürnberg 11(DE)**

ACTORUM AG

## Beschreibung

Die Erfindung bezieht sich auf eine Abgasreinigungsvorrichtung für Kraftfahrzeuge mit wenigstens einem wabenförmig strukturierten monolithischen Keramikkörper in einem metallischen Gehäuse mit stirnseitigen Abgaszu- und -abführstutzen und einer zwischen den Keramikkörpern und dem Außengehäuse angeordneten thermisch isolierenden Federmatte, die im Bereich der Abgaszu- und -abführstutzen und der Abstände zwischen den Keramikkörpern durch eine hochtemperaturfeste Abdeckung geschützt ist, die mindestens im Bereich der Abgaszu- und -abführstutzen von den Stirnflächen der Keramikkörper beabstandet angeordnet ist.

Eine derartige Abgasreinigungsvorrichtung dient der Verminderung der beim Betrieb von Verbrennungskraftmaschinen abgegebenen gasförmigen Schadstoffanteile und Rußpartikel.

Vorgeschlagen wurde schon eine Abgasreinigungsvorrichtung – man vergleiche hierzu beispielsweise EP-A 0 219 636 – bei der eine Stoßdämpfend sichere Halterung der Keramikmonolithe im metallischen Außengehäuse der Abgasreinigungsvorrichtung mit einer zwischengeordneten Mineralfaserschicht erreicht wird, die aus einem über beide Keramikmonolithe hinweg in die konischen Abgaszu- und -abführstutzen hinreichenden und zwei gesonderten, den Hauptteil der konischen Stutzen auskleidenden Fasermattenabschnitten besteht, die in einem ringförmigen Stirnabschnitt aneinandergrenzen.

Der Erfindung liegt die Aufgabe zugrunde, eine derartige Abgasreinigungsvorrichtung so auszugestalten, daß einerseits eine verbesserte Lagerung der Matte, als auch insbesondere der Auskleidungstrichter in Verbindung mit einer besseren Wärmeisolierung erzielt wird, so daß das Außengehäuse aus billigem, nicht so sehr temperaturbeständigem Material bestehen kann.

Zur Lösung dieser Aufgabe ist erfindungsgemäß vorgesehen, daß die aus einer mit Quellglimmer (Vermiculit) durchsetzten Aluminiumsilikatwolle bestehende Federmatte zur stoß- und schalldämpfenden sowie zur wärmeabschirmenden Lagerung der Keramikmonolithe und der Auskleidungstrichter in den konischen Abgasführungsstutzen durchgehend über die gesamte Länge des metallischen Gehäuses erstreckt.

Damit wird eine die bruchempfindlichen Keramikmonolithe einwandfrei sicher halternde und stoßdämpfend im metallischen Außengehäuse lagernde Anordnung erreicht und das tragende Gehäuse optimal vor thermischer Überlastung durch die heißen Abgase geschützt und dabei gleichzeitig die Körperschallabstrahlung der Abgasreinigungsvorrichtung wesentlich reduziert.

Darüber hinaus hat die über die gesamte Länge des Gehäuses, d.h. vom Anfang des Abgaszuführstutzens bis zum Ende des Abgasabführstutzens, durchgehende Einstückigkeit der Federmatte den zusätzlichen Vorteil, daß bei Auftreten eines – in der Praxis nie auch für jeden Extremfall auszuschließenden – Spaltes zwischen der hochtemperaturfesten Abdeckung und dem monolithischen Keramikkörper das Abgas durch diesen Spalt niemals auf eine Stirnkante, sondern die relativ dichte Haut der aus mit Quellglimmer (Vermiculit) durchsetzten Aluminiumsilikatwolle bestehenden Federmatte auftrifft, so daß das so gefürchtete Ausblasen derartiger auch als Quellmatten bezeichneter Federmatten sicher verhindert ist.

Zur optimalen Abschirmung der Federmatte vor direkter Einwirkung der heißen strömenden Abgase sieht die Erfindung in einer ersten Ausführung weiter vor, die in den Abgaszu- und -abführstutzen angeordneten, aus hochhitzebeständigem Stahl bestehenden Auskleidungstrichter im Bereich ihrer äußeren Enden mit dem Gehäuse der Abgasreinigungsvorrichtung zu verschweißen und den Einbauabstand zwischen den monolithischen Keramikkörpern und den Auskleidungstrichtern so zu bemessen, daß die Auskleidungstrichter im Betriebszustand der Anordnung an den Stirnseiten der Monolithe anliegen und den im Kaltzustand vorhandenen Zwischenraum verschließen, der also gerade dazu ausreicht, daß sich die Metalltrichter entsprechend dem Wärmedehnungskoeffizienten des Werkstoffes, aus dem sie bestehen, im Betriebszustand der Anlage soweit in Achsrichtung zum jeweils angrenzenden Monolithen hin ausdehnen können, daß sie an diesem unter vollständiger Abdichtung des im kalten Zustand der Anlage vorhandenen Einbauspaltes anliegen.

Anstelle der vorstehend beschriebenen Konstruktion mit heiß an der Stirnseite der Monolithe anstehenden Auskleidungstrichtern - bei denen gerade im Anfahrverhalten bei noch offenem Spalt der durchgehenden Einstückigkeit der Federmatte großes Gewicht zukommt, wie weiter oben ja bereits beschrieben worden ist - kann gemäß einem zweiten Ausführungsbeispiel der Erfindung auch vorgesehen sein, daß der Einbauabstand zwischen den monolithischen Keramikkörpern und den Auskleidungstrichtern so bemessen ist, daß die Auskleidungstrichter im Betriebszustand der Anordnung an den Stirnseiten der Monolithe anliegen und den im Kaltzustand vorhandenen Zwischenraum verschließen.

Der Erfindung liegt dabei die Erkenntnis zugrunde, daß das unmittelbare Anliegen der metallischen Abschirmtrichter oder auch eines metallischen Stützrings an den Keramikkörpern nicht zur - wie bislang befürchtet und deshalb durch die komplizierteren Lösungen (man vgl. beispielsweise die älteren deutschen Patentanmeldung P 35 09 790.6 und P 35 31 807.4) umgangenen - Zerstörung der Keramikkörper führt, sondern lediglich dazu, daß sich die Abschirmtrichter nutartig in die Stirnfläche der Keramikkörper eingraben. Je nach dem thermischen Spiel, d.h. der Abkühlung oder Aufheizung der Abgasreinigungsvorrichtung erfolgt dann eine Verschiebung der Stirnkanten der Abschirmtrichter in dieser von ihnen selbst eingegrabenen Nut, ohne daß dabei allerdings der Keramikkörper wirklich zerstört wird. Das Eingreifen jeweils in eine solche selbst gegrabene Nut im Keramikkörper bietet dabei auch eine hervorragende zusätzliche Abdichtung, so daß ein Ausblasen der Federmatten sicher verhindert ist.

Die Abschirmtrichter, sowie gegebenenfalls auch die Stützringe sollen in Ausgestaltung der Erfindung aus ferritischem oder austenitischem Stahl bestehen und im Bereich der äußeren Enden mit dem Gehäuse der Abgasreinigungsvorrichtung verschweißt sein.

Demgegenüber hat es sich bei allen Ausführungsformen als zweckmäßig erwiesen - auch wenn es nicht in allen Fällen zwingend erforderlich ist - daß die Stützringe auch zwischen jeweils zwei monolithischen Keramikkörpern aus Keramik bestehen und an den Stirnflächen der ihnen benachbarten Keramikkörper anliegen.

Neben den beiden vorstehend beschriebenen Ausführungsvarianten einer erfindungsgemäßen Abgasreinigungsvorrichtung, bei der die Auskleidungstrichter aus Metall bestehend entweder im warmen Zustand oder gegebenenfalls auch bereits im kalten Zustand zur Abdichtung am monolithischen Keramikkörper anstehen, hat sich schließlich bei umfangreichen, der vorliegenden Erfindung zugrundeliegenden Versuchen herausgestellt, daß eine noch weitere Verbesserung der Abschirmvorrichtungen bei einfachem Aufbau und sicherer Abschirmung der Federmatte gegen die pulsierenden Abgasströme erzielt werden kann, die darüber hinaus eine höhere Standfestigkeit gegenüber den korrodierenden Bestandteilen des Abgases besitzt, wenn man außer den Stützringen aus Keramik auch die Abschirmtrichter aus keramischem Werkstoff ausbildet und sie mit ihren Stirnseiten unmittelbar an den Monolithen anstehen läßt, wobei in diesen Fällen die äußeren Enden bevorzugt frei im Außengehäuse im Strömungsschatten des Außengehäuses bzw. der Anschlußrohre liegen sollen.

Durch die Ausbildung der Abschirmtrichter aus keramischem Werkstoff anstelle der bisher meist üblichen Verwendung von Metalltrichtern, ergeben sich bei allen Teilen, die innerhalb des Außengehäuses liegen, keine unterschiedlichen Ausdehnungskoeffizienten, da die Abschirmungen die gleichen niedrigen Ausdehnungskoeffizienten aufweisen wie die monolithischen Keramikkörper mit ihrer katalytischen Oberflächenbeschichtung. Dies gestattet es besonders einfach, die Abschirmtrichter unmittelbar an den Keramkkörper anstoßen zu lassen, da keine radialen Dehnungsunterschiede und damit keine Verspannungen und daraus resultierend Beschädigungen auftreten können.

Durch das bereits genannte freie Einragen der äußeren Enden der Abschirmtrichter lassen sich die Dehnungsunterschiede zwischen der keramischen Innengruppe (Auskleidungstrichter, Stützringe und monolithische Keramikkörper) zum metallischen Außengehäuse sehr einfach abfangen, wobei gerade durch die Ausbildung der Federmatte als Quellmatte auch bei dieser außen freien schwimmenden Lagerung der Abschirmtrichter eine zuverlässige Halterung für Sie erreicht werden kann.

Ein weiterer Vorteil der erfindungsgemäßen Ausbildung der Abschirmtrichter und gegebenenfalls der Stützringe aus keramischem Werkstoff besteht darin, daß auch diese Keramikkörper, insbesondere aber wenigstens der Eingangs-Abschirmtrichter, mit einer katalytischen Beschichtung versehen sein können, wodurch die Umsetzung der unerwünschten Schadstoffe im Abgas noch weiter verbessert werden kann.

Neben einem einfachen stumpfen Anstoßen der Abschirmtrichter an die Keramikkörper kann auch vorgesehen sein, daß die Abschirmtrichter an ihren Stoßkanten abgesetzt sind und den jeweiligen Keramikkörper teilweise umgreifen.

Die Wandstärke der keramischen Abschirmkörper liegt vorzugsweise zwischen etwa 2 und 6 mm, je nach Art des verwendeten keramischen Werkstoffs.

In weiterer Ausgestaltung der Erfindung kann zum Zwecke einer gleichmäßigen stirnseitigen Beaufschlagung des Keramikkörpers mit Abgas der Eingangsabschirmtrichter entweder als Exponentialrichter ausgebildet und/oder mit inneren Strömungsleitkörpern versehen sein. Eine derartige spezielle Formgebung bzw. das Vorsehen von Strömungsleitkörpern soll der mißlichen Tatsache entgegenwirken, daß die Anströmung der gegenüber den dünnen Abgasrohren im Querschnitt sehr viel größeren Keramikkörper - noch dazu, wenn die Keramikkörper keinen runden, sondern ovalen Querschnitt aufweisen - außerordentlich ungleichmäßig ist, so daß ein Großteil der außenliegenden Kanäle der Monolithen überhaupt nicht sinnvoll ausgenutzt werden können.

Dem läßt sich erfindungsgemäß dadurch sehr einfach abhelfen, daß die Strömungsleitkörper eine Mehrzahl von Leitwänden aufweisen, die in der Ein- und Austrittsstirnfläche des jeweiligen Abschirmtrichters dessen Querschnittsänderung entsprechend sich ändernde Ausschnitte umgrenzen. Durch diese Zwangsführung des Abgases erhält man eine wesentlich gleichmäßigere Beaufschlagung der Stirnfläche des Keramikkörpers und damit eine wesentlich gleichmäßigere Ausnutzung der in ihm vorhandenen Kanäle mit katalytisch beschichteten Innenwänden, wobei durch Vorsehen einer entsprechenden Vielzahl von Leitwänden und damit eine entsprechend feinere Unterteilung der Eintrittsfläche des Abschirmtrichters die Gleichmäßigkeit der Beaufschlagung der einzelnen Abschnitte des Keramikkörpers entsprechend erhöht werden kann.

Obgleich die Ausbildung des Eingangsabschirmtrichters als Exponentialtrichter, bzw. das Vorsehen von Strömungsleitkörpern auch bei metallischen Abschirmtrichtern möglich sind, eignen sich doch keramische Abschirmtrichter ganz besonders für derartige Formgebungen und Einsätze, da diese sehr einfach als einstückige Bauteile im Wege des Formpressens oder -gießens hergestellt werden können und dabei auch sehr günstige Formen für die Leitwände gestatten, die ja in den bereits angesprochenen Fällen, bei denen Keramikkörper und damit auch der Mittelabschnitt des Außengehäuses ovalen Querschnitt aufweisen, einen übergang von einem kreisförmigen Eingangsquerschnitt des Abschirmtrichters zur vergrößerten ovalen Innenöffnung bewirken müssen.

Eine besonders günstige Lagerung und eine verschwindende Gefahr einer funktionsbeeinträchtigenden Beschädigung der Kerakikkörper durch das Anliegen der Abschirmtrichter bzw. des Stützrings, insbesondere falls auch dieser aus Stahl besteht, ergibt sich schließlich gemäß einem weiteren Merkmal der Erfindung dadurch, daß eine konstante Spaltbreite zwischen den Abschirmkörpern bzw. Keramikkörpern und dem Gehäuse vorgesehen ist.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:

Fig. 1 einen schematischen Längsschnitt durch eine erfindungsgemäße Abgasreinigungsvorrichtung mit einer in deren oberen und unteren Figurenhälfte unterschiedlichen Längenausdehnung von Abdeckmanschetten,

Fig. 2 einen Schnitt gemäß der Linie II-II in Fig. 1,

Fig. 3 einen Schnitt durch eine andere Ausführungsform einer erfindungsgemäßen Abgasreinigungsvorrichtung, bei der sowohl die Abschirmtrichter als auch die Stützringe aus Stahl bestehen und die Abschirmtrichter in kaltem Zustand bereits an den monolithischen Keramikkörpern anstehen,

Fig. 4 eine teilweise geschnittene Seitenansicht einer erfindungsgemäßen Abgasreinigungsvorrichtung, bei der neben dem Stützring auch die Abschirmtrichter aus Keramik bestehen,

Fig. 5 eine um 90° versetzte, wiederum teilweise geschnittene Seitenansicht der mit ovalen Keramikkörpern versehenen Abgasreinigungsvorrichtung nach Fig. 4,

Fig. 6 einen Querschnitt längs der Linie VI-VI in Fig. 5,

Fig. 7 einen Schnitt durch den Eingangsabschnitt einer abgewandelten Abgasreinigungsvorrichtung mit Strömungsleitkörpern im Eingangs-Abschirmtrichter,

Fig. 8 eine Stirnansicht des keramischen Abschirmtrichters in Fig. 7 in Richtung des Pfeils VIII und

Fig. 9 eine Stirnansicht eines noch weiter abgewandelten Abschirmtrichters mit geänderter Struktur der Leitwände.

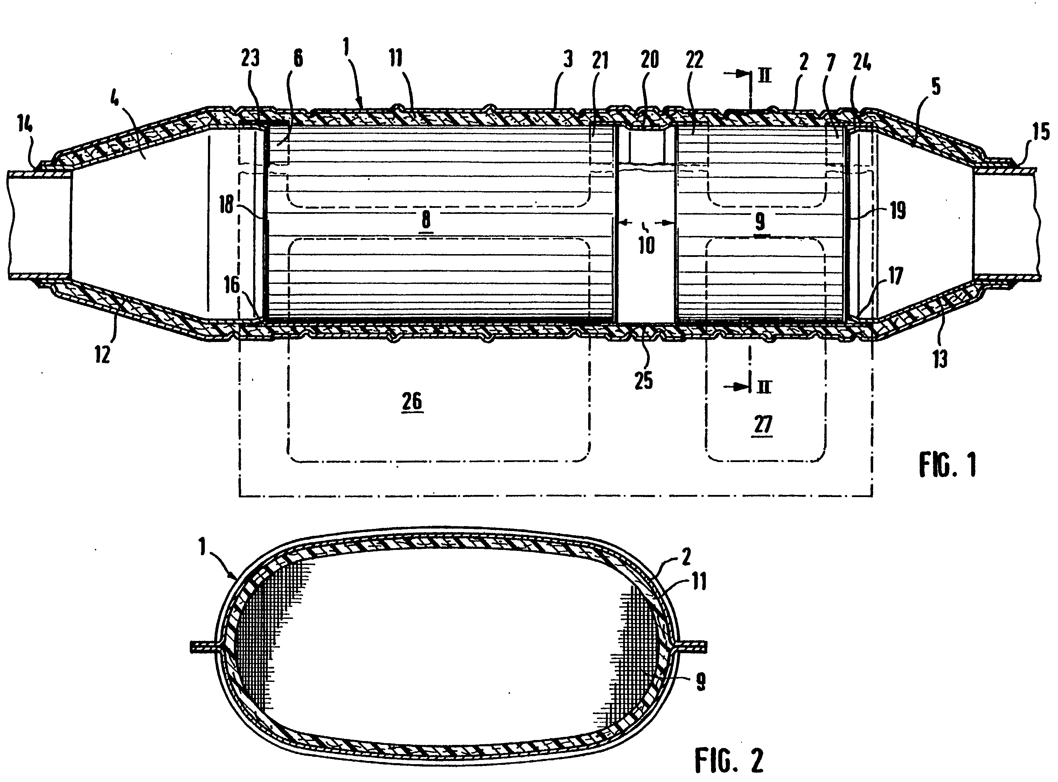

Die einzelnen Teile der Abgasreinigungsvorrichtung 1 nach den Fig. 1 und 2 sind in einem metallischen Gehäuse 2 angeordnet, das aus einem im wesentlichen zylindrischen Mittelabschnitt 3 und zwei daran anschließenden sich konisch nach außen verjüngenden Abgaszu- und -abführstutzen 4, 5 besteht. Im Mittelabschnitt 3 des Metallgehäuses 2 sind die das Ausfiltern unerwünschter Schadstoffe bewirkenden, wabenartig strukturierten, ggf. katalytbeschichteten Keramikmonolithe 8, 9 so angeordnet, daß ihre Endabschnitte 6, 7 unweit des Überganges des zylindrischen Gehäuseabschnittes 3 in den konischen Stutzen 4, 5 liegen und zwischen ihnen ein Abstand 10 besteht, dessen Breite vorzugsweise zwischen 10 und 40 mm betragen soll.

Die außerordentlich bruchempfindlichen Keramikmonolithe 8, 9 sind im Gehäuseabschnitt 3 mittels einer Federmatte 11 dämpfend gehalten, die vorzugsweise aus einer Aluminiumsilikatwolle besteht, welche mit Quellglimmer (Vermiculit) durchsetzt ist, das sich beim Erwärmen um ein Vielfaches seines ursprünglichen Volumens ausdehnt und damit den sicheren Halt der Keramikmonolithe 8, 9 auch während der Ausdehnung des Metallgehäuses 2 beim Betrieb der Abgasreinigungsvorrichtung 1 gewährleistet.

Die Federmatte 11 erstreckt sich sowohl über den Mittelabschnitt 3 des metallischen Gehäuses 2, als auch über die Gaszu- und -abführstutzen 4, 5, in denen sie durch Auskleidungstrichter 12, 13 gegenüber den durchströmenden Gasen abgeschirmt ist.

Die aus Metallblech, vorzugsweise aus hochhitzebeständigen Stahl bestehenden Auskleidungstrichter 12, 13 sind im Bereich ihrer äußeren Enden 14, 15 mit dem Metallgehäuse 2 der Abgasreinigungsvorrichtung verschweißt und schließen damit die zwischen dem Gehäuse 2 und den Auskleidungstrichtern 12, 13 liegende Federmatte 11 dicht nach außen ab. Zum Schutz dieser Matte 11 vor dem auftreffenden Gasstrom sind die Auskleidungstrichter 12, 13 in ihren den Keramikmonolithen 8, 9 benachbarten Randbereichen 16, 17 wie Fig. 1 zeigt, leicht in Richtung der Mittellängsachse der Abgasreinigungsvorrichtung 1 geneigt, und zwar so wenig, daß zwar der pulsierende Gasstrom etwas abgelenkt und sein direktes Auftreffen auf die vor dem Aufblasen zu schütze de Federmatte 11 ausgeschlossen, andererseits aber der wirksame Eintrittsquerschnitt der Keramikmonolithe 8, 9 nur geringfügig vermindert wird.

Die Auskleidungstrichter 12, 13 liegen, wie ebenfalls Fig. 1 zu entnehmen ist, bei der Montage, d.h. im kalten Zustand der Anordnung nicht den äußeren Stirnseiten der Keramikmonolithe an. Vielmehr ist zwischen diesen Teilen ein Einbauabstand 18, 19 belassen, dessen Größe gerade so bemessen ist, daß er im Betriebszustand der Abgasreinigungseinrichtung infolge der um einige hundert Grad höheren Temperaturen durch die wärmebedingte größere räumliche Ausdehnung der Auskleidungstrichter 12, 13 gerade ausgefüllt wird, so daß deren Randbereiche 16, 17 den Stirnseiten der Keramikmonolithe 8, 9 dicht anliegen.

Zur weiteren Abschirmung der Federmatte 11 vor der Berührung mit durch die Anlage strömenden heißen Gasen sieht die Erfindung zusätzliche Abdeckmanschetten vor, die in die kritischen Bereiche der Abgasreinigungsvorrichtung eingegliedert werden, und zwar einmal im Abstandsbereich 10 zwischen den beiden Keramikmonolithen 8 und 9, bei dem in der oberen Hälfte von Fig. 1 veranschaulichten Ausführungsbeispiel durch eine Manschette 20, deren Länge so bemesen ist, daß sie den freien Raum 10 zwischen den Keramikmonolithen 8, 9 umschließt und auch noch deren angrenzende Endbereiche 21, 22 übergreift. Bei diesem Ausführungsbeispiel sind noch zwei weitere Manschetten 23, 24 vorgesehen, welche die den Abgaszu- und -abführstutzen 4, 5 benachbarten Endbereiche 6, 7 der Keramikmonolithe 8, 9 abdecken und gleichzeitig die angrenzenden Randbereiche 16, 17 der Auskleidungstrichter 12, 13 umschließen.

Es liegt jedoch auch im Sinne der Erfindung, statt dieser einzelnen Manschetten 20, 23, 24 eine durchgehende Manschette 25 vorzusehen, die sich über die gesamte Länge des zylindrischen Mittelabschnittes 3 des Metallgehäuses 2 erstreckt und dadurch alle kritischen Öffnungsspalte überdeckt, an denen ein besonderer Schutz der Federmatte 11 vor auftretenden heißen Gasen erforderlich ist. Diese Ausführungsform der Erfindung ist in der unteren Hälfte von Fig. 1 dargestellt, die auch eine vorteilhafte Weiterbildung dieser einstückigen Manschette 25 mit fensterartigen Ausnehmungen 26, 27 zeigt, die den Zweck haben, in diesen Ausschnitten eine direkte Übertragung der radialen, der sicheren Halterung der Keramikmonolithe 8, 9 dienenden Spannkräfte auf deren Mantelflächen zu übertragen. Bei der praktischen Erprobung mit fensterartigen Ausnehmung 26, 27 ausgestatteter Abdeckmanschetten 25 wurde gefunden, daß sich eine optimale Ausführungsform dann ergibt, wenn sich die Ausnehmungen 26, 27 über mindestens 2/3 der Mantelfläche der Keramikmonolithe 8, 9 erstrecken.

Als geeignete Werkstoffe für diese Abdeckmanschetten haben sich einerseits Stahlblech von 0,04 bis 0,3 mm Stärke, andererseits auch Keramikkörper, Keramikvlies oder Keramikgewebe von vorzugsweise 0,5 bis 2 mm Wanddicke erwiesen.

Von ganz ausschlaggebender Bedeutung für die in den Fig. 1 und 2 dargestellte Abgasreinigungseinrichtung ist aber vor allem die sich unterbrechungslos über die gesamte Länge des Metallgehäuses erstreckende, d.h. durchgehende Federmatte 11, die sicherstellt, daß sämtliche im Gehäuseinnenraum angeordneten Teile der Abgasreinigungseinrichtung 1, also die Keramikmonolithe 8, 9 die Auskleidungstrichter 12, 13 sowie alle Abdeckmanschetten 20,23, 24 bzw. 25 stoß- und schallgedämpft im Gehäusemantel 2 gelagert sind, der dadurch vor Überhitzung geschützt ist, wobei gleichzeitig eine ganz erhebliche Verringerung des von der Abgasreinigungsanlage abgegebenen Körperschalls erreicht wird.

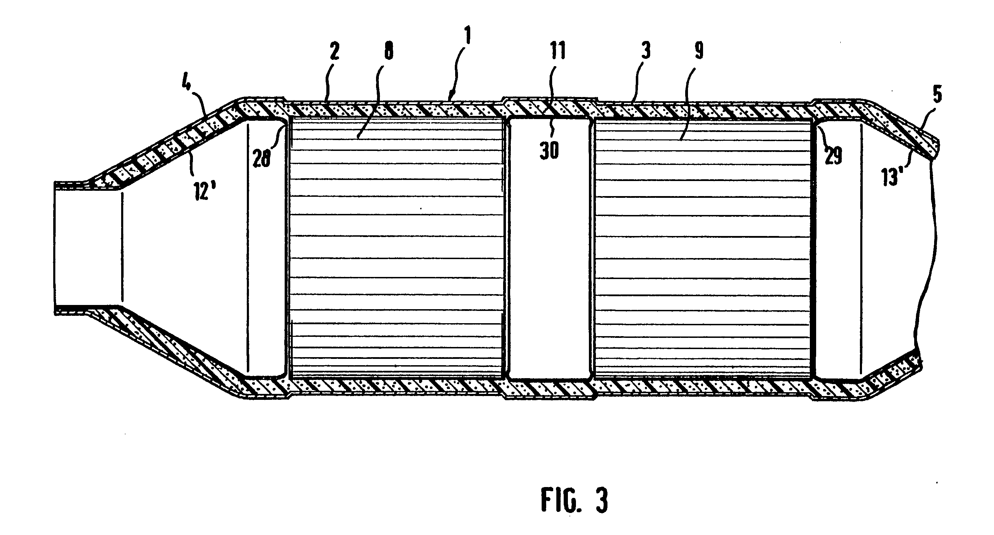

Beim Ausführungsbeispiel nach Fig. 3 ist im zylindrischen Mittelteil des metallischen Außengehäuses 2 mit Hilfe der wiederum als Quellmatte ausgebildeten Federmatte 11 die monolithischen Keramikkörper 8 und 9 gelagert. Die konischen Abgaszuführstutzen 4 und Abgasauslaßstutzen 5 sind durch Auskleidungstrichter 12', 13' aus hochtemperaturfestem ferritischem oder austenitischem Stahl überdeckt, deren jeweils innere Stirnkanten 28 bzw. 29 bereits im kalten Zustand unmittelbar an den Keramikkörpern 8, 9 anstoßen. In entsprechender Weise stößt auch der zwischen den Keramikkörpern 8, 9 liegende Stützring 30 mit seinen abgewinkelten Stirnkanten an beiden Keramikkörpern 8, 9 an, wobei die Abwinklung der Stirnkanten nicht zwingend erforderlich wäre. Der Ausgleich der Dehnungsunterschiede erfolgt durch ein sich Eingraben der Stirnkanten 28, 29 der Abschirmtrichter 12', 13' bzw. des Stützrings 30 in die Stirnflächen der Keramikkörper 8, 9, in denen dann ein gewisses thermisches Ausdehnungsspiel während des Betriebs möglich ist. Im Ausführungsbeispiel nach Fig. 3 erkennt man wiederum die durchgehende Ausbildung der Federmatte vom Anfang der Abgaszuführstutzens bis zum Ende des Abgasabführstutzens und darüber hinaus die bevorzugt einzuhaltende konstante Spaltbreite zwischen dem Außengehäuse und der inneren Abschirmung bzw. der Außenfläche der Keramikkörper 8, 9.

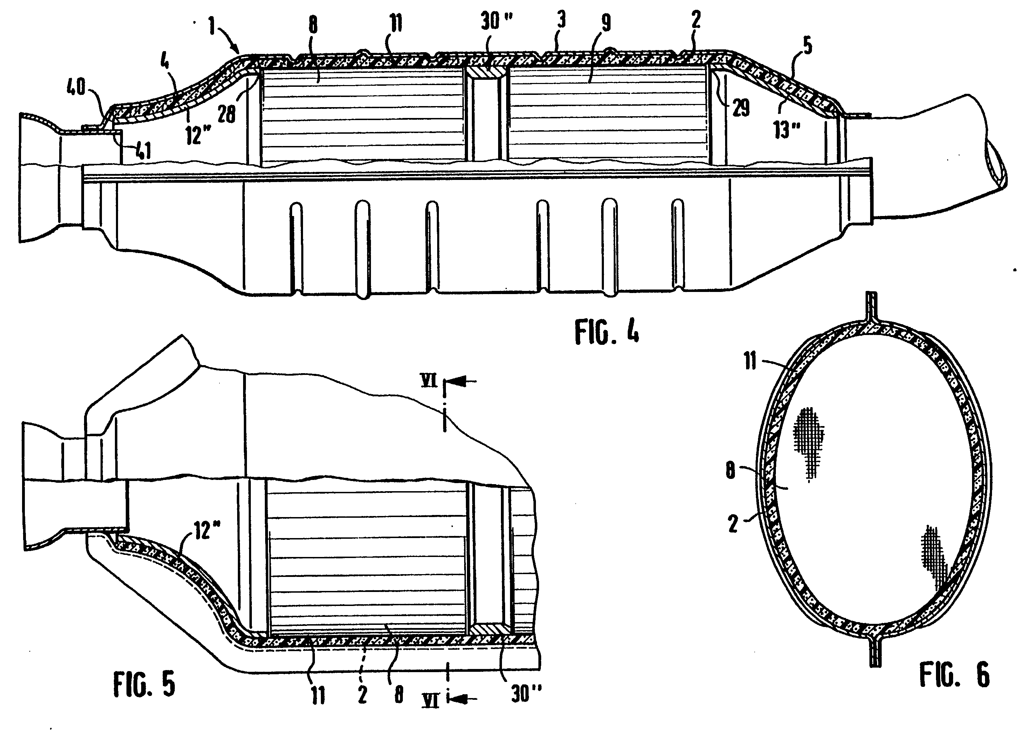

Bei den Ausführungsbeispielen gemäß den Fig. 4 bis 9 sind im querschnittlich ovalen zylindrischen Mittelteil des metallischen Außengehäuses 2 wiederum mit Hilfe einer durchgehenden Federmatte 11, bevorzugt aus mit Quellglimmer (Vermiculit) durchsetzter Aluminiumsilikatwolle, die wabenförmig strukturierten und gegebenenfalls mit einer katalytisch wirksamen Oberflächenbeschichtung versehenen Keramikkörper 8 und 9 gelagert. Die konischen Abgaszuführstutzen 4 und -auslaßstutzen 5 sind durch innere Auskleidungstrichter 12" und 13" aus Keramik überdeckt, deren jeweils innere Stirnkanten 28 bzw. 29 unmittelbar an den Keramikkörpern 8, 9 anstoßen. In entsprechender Weise stößt auch der zwischen den Keramikkörpern 8, 9 liegende Stützring 30" mit seinen Stirkflächen an beiden Keramikkörpern 8, 9 an.

Zum Ausgleich der Dehnungsunterschiede zwischen dem Außengehäuse 2 und den keramischen Innenteilen ist wenigstens auf einer Seite, bevorzugt an der Eingangsseite der Abschirmtrichter 12" so ausgebildet und angeordnet, daß er an seiner dem Keramikkörper abgelegenen Einlaßseite frei im Außengehäuse endet. Dabei soll die frei endende Stirnkante 40 möglichst im Strömungsschatten des Außengehäuses bzw. des Eingangsrohrs 41 liegen, so daß das Abgas nicht hinter den Auskleidungstrichter 12" gelangt und damit die der Lagerung der Auskleidungstrichter 12", 13" dienende als Quellmatte ausgebildete Federmatte 11 nicht ausblasen kann.

Im Ausführungsbeispiel nach den Fig. 4 und 5 ist der Abgaszuführstutzen 4 und dementsprechend auch der im wesentlichen gleichgeformte Auskleidungstrichter 12" nicht einfach kegelig, sondern als Exponentialtrichter ausgebildet, um eine gleichmäßigere Beaufschlagung der Stirnfläche des Keramikkörpers 8 und damit eine gleichmäßigere Ausnutzung der Keramikkörper 8 und 9 sicherzustellen. Dies gilt insbesondere, nachdem ja nicht nur ein Übergang von dem kleineren Querschnitt des Abgaszuführrohrs 41 auf den größeren Querschnitt des Keramikkörpers 8 notwendig ist, sondern dabei ja auch noch eine Querschnittsformänderung von einem kreisrunden Querschnitt zu einem ovalen Querschnitt stattfindet.

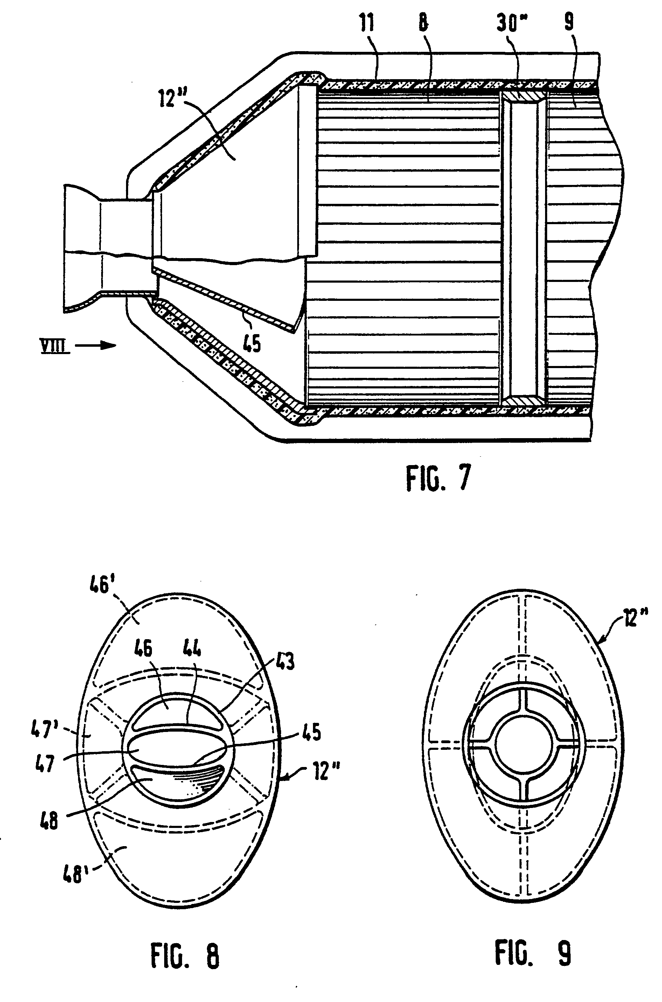

Um die Gleichmäßigkeit der Beaufschlagung des eingangsseitigen Keramikkörpers 8 zu erhöhen - beim zweiten Keramikkörper 9 erfolt ja die Beaufschlagung im wesentlichen so wie die des ersten, da sich die Gasströmungen ja beim Durchsetzen des ersten Keramikkörpers 8 nicht ändern - können, was in den Fig. 7 bis 9 dargestellt ist, zusätzliche Strömungsleitkörper vorgesehen sein, die in den dargestellten Ausführungsbeispielen einstückige Teile der Eingangs-Auskleidungstrichter 12" sind. In Fig. 8 erkennt man, wie die kreisförmige Eingangsstirnfläche 43 des Abschirmtrichters 12" durch zwei Leitwände 44 und 45 in drei Abschnitte 46, 47 und 48 unterteilt ist, wobei diese drei Abschnitte in entsprechende Abschnitte 46', 47' und 48' am ovalen Austrittsende 28 des Abschirmtrichters 12" projiziert sind. Der in den einzelnen Abschnitten 46 bis 48 ankommende Gasstrom wird - was er ohne die Leitwände 44 und 45 nie tun würde - ebenso im Drittelverhältnis an die Bereiche 46' bis 48' am inneren Ende des Abschirmtrichters 12" abgegeben. Die Fig. 9 zeigt einen abgewandelten Abschirmtrichter mit einer anderen Anordnung, wobei eine feinere Unterteilung der Eintrittsstirnfläche in fünf Abschnitte durch die Leitfläche vorgesehen ist, demzufolge auch eine noch gleichmäßigere Beaufschlagung des Keramikkörpers 8 erzielt werden kann. Während der Abschirmtrichter 12" mit seiner inneren Stirnkante 28 unmittelbar am Keramikkörper 8 anliegt, sollen die Leitwände (wie man dies in Fig. 7 anhand der Leitwand 45 erkennen kann) mit ihren inneren Stirnkanten etwas zurückgesetzt ausgebildet sein. Neben dem stumpfen Anstoßen der Innenkanten der Abschirmtrichter 12" (Fig. 4 und 5) kann auch eine in Fig. 7 gezeigte Anlage des Abschirmtrichters 12" am Keramikkörper 8 gewählt werden, bei welcher das vordere Ende des in seinem Durchmessers etwas vergrößerten Abstandtrichters 12" abgesetzt ist, so daß es den Keramikkörper 8 auch noch etwas umgreift.

## Patentansprüche

1. Abgasreinigungsvorrichtung für Kraftfahrzeuge mit wenigstens einem wabenförmig strukturiertem monolithischen Keramikkörper (8, 9) in einem metallischen Gehäuse (2) mit stirnseitigen Abgaszu- und -abführstutzen (4, 5) und einer zwischen den Keramikkörpern (8, 9) und dem Außengehäuse (2) angeordneten thermisch isolierenden Federmatte (11), die im Bereich der Abgaszu- und -abführstutzen (4, 5) und der Abstände zwischen den Keramikkörpern (8, 9) durch eine hochtemperaturfeste Abdeckung (12, 13, 20) geschützt ist, die mindestens im Bereich der Abgaszu- und -abführstutzen (4, 5) von den Stirnflächen der Keramikkörper (8, 9) axial beabstandet angeordnet ist, dadurch gekennzeichnet, daß sich die aus einer mit Quellglimmer (Vermiculit) durchsetzten Aluminiumsilikatwolle bestehende Federmatte (11) zur stoß- und schalldämpfenden sowie zur wärmeabschirmenden Lagerung der Keramikmonolithe (8, 9) und der Auskleidungstrichter (12, 13) in den konischen Abgasführungsstutzen (4, 5) durchgehend über die gesamte Länge des metallischen Gehäuses (2) erstreckt.

2. Abgasreinigungsvorrichtung nach Anspruch 1, dadurch gekennzeichnet, daß der Einbauabstand (18, 19) zwischen den monolithischen Keramikkörpern (8, 9) und den Auskleidungstrichtern (12, 13) so bemessen ist, daß die Auskleidungstrichter (12, 13) im Betriebszustand der Anordnung an den Stirnseiten der Monolithe (8, 9) anliegen und den im Kaltzustand vorhandenen Zwischenraum (18, 19) verschließen.

3. Abgasreinigungsvorrichtung nach Anspruch 1, dadurch gekennzeichnet, daß die Monolithen (8, 9) mit ihren Stirnseiten im kalten Nichtbetriebszustand an der stirnseitigen Aufstanzfläche der Auskleidungstrichter (12, 13) anstehen und sich die Auskleidungstrichter um den Betrag L der Wärmedehnung in die Monolithen (8, 9) - unter Bildung einer nahezu gasdichten Verbindung zwischen Auskleidungstrichter (12, 13) und Monolithen (8, 9) unter Betriebstemperatur - einarbeiten.

4. Abgasreinigungsvorrichtung nach einem der Ansprüche 1 bis 3, dadurch gekennzeichnet, daß die aus ferritischem oder austenitischem Stahl bestehenden Auskleidungstrichter (12, 13) im Bereich der äußeren Enden (14, 15) mit dem Gehäuse (2) der Abgasreinigungsvorrichtung (1) verschweißt sind.

5. Abgasreinigungsvorrichtung nach einem der Ansprüche 1 bis 4, dadurch gekennzeichnet, daß die Stützringe aus Keramik bestehen und an den Stirnflächen der ihnen benachbarten Keramikkörper (8, 9) anliegen.

6. Abgasreinigungsvorrichtung nach Anspruch 1 oder 5, dadurch gekennzeichnet, daß die Auskleidungstrichter aus keramischen Werkstoff bestehen und mit ihren Stirnseiten unmittelbar an den Monolithen anliegen.

7. Abgasreinigungsvorrichtung nach einem der Ansprüche 1 bis 6, dadurch gekennzeichnet, daß wenigstens einer der Abschirmtrichter, insbesondere der Eingangs-Auskleidungstrichter mit einer katalytischen Beschichtung versehen ist.

8. Abgasreinigungsvorrichtung nach Anspruch 6 oder 7, dadurch gekennzeichnet, daß die Auskleidungstrichter an den äußeren Enden frei im Außengehäuse im Strömungsschatten des Außengehäuses bzw. er Anschlußrohre liegen.

9. Abgasreinigungsvorrichtung nach einem der Ansprüche 1 bis 8, dadurch gekennzeichnet, daß die Auskleidungstrichter (12, 13) an ihren Stoßkanten abgesetzt sind und den jeweiligen Keramikkörper (8, 9) teilweise umgreifen.

10. Abgasreinigungsvorrichtung nach einem der Ansprüche 1 bis 9, dadurch gekennzeichnet, daß die Keramikabschirmkörper eine Wandstärke zwischen 2 und 6 mm aufweisen.

11. Abgasreinigungsvorrichtung, insbesondere nach einem der Ansprüche 1 bis 10, dadurch gekennzeichnet, daß der Eingangs-Auskleidungstrichter zum Zwecke einer gleichmäßigen stirnseitigen Beaufschlagung des Keramikkörpers mit Abgas als Exponentialtrichter ausgebildet und/oder mit inneren Strömungsleitkörpern versehen ist.

12. Abgasreinigungsvorrichtung nach Anspruch 11, dadurch gekennzeichnet, daß der Strömungsleitkörper eine Mehrzahl von Leitwänden (44, 45) aufweist, die in den Ein- und Austrittsflächen des Auskleidungstrichters (12") dessen Querschnittsänderung entsprechend sich ändernde Ausschnitte (46, 47, 48) umgrenzen.

13. Abgasreinigungsvorrichtung nach einem der Ansprüche 1 bis 12, dadurch gekennzeichnet, daß der Mittelabschnitt des Außengehäuses (3) und die Keramikkörper (8, 9) ovalen Querschnitt aufweisen und daß die Abgaszu- und -abführstutzen (4, 5) und die Auskleidungstrichter (12, 13) einen sich von einer kreisförmigen Eingangsöffnung zur vergrößerten ovalen Innenöffnung ändernden Querschnitt aufweisen.

14. Abgasreinigungsvorrichtung nach einem der Ansprüche 1 bis 13, gekennzeichnet durch eine konstante Spaltbreite zwischen den Auskleidungstrichtern bzw. Keramikkörpern und dem Gehäuse.

## Claims

1. An exhaust gas purifying device device, for motor vehicles with at least one honeycomb-structured monolithic ceramic body (8, 9) in a metal housing (2) with exhaust gas inlet and outlet nozzles (4, 5) on the end faces and a thermally insulated spring matting (11), which is disposed between the ceramic bodies (8, 9) and the outer housing (2) and which is protected in the region of the exhaust gas inlet and outlet nozzles (4, 5) and of the intervals between the ceramic bodies (8, 9) by a high temperature-resistant covering (12, 13, 20), which is arranged axially spaced from the end faces of the ceramic bodies (8, 9) at least in the region of the exhaust gas inlet and outlet nozzles (4, 5), characterised in that the spring matting (11) consisting of aluminium silicate wool permeated by swelling mica (vermiculite) extends continuously through the whole length of the metal housing (2) for the purpose of storing the ceramic monoliths (8, 9) and the lining funnels (12, 13) in the conical exhaust gas conducting nozzles (4, 5) in such a manner as to absorb impact and vibration and to provide heat protection.

2. An exhaust gas purifying device according to claim 1, characterised in that the installation distance (18, 19) between the monolithic ceramic bodies (8, 9) and the lining funnels (12, 13) is so dimensioned that the lining funnels (12, 13) abut the end faces of the monoliths in the operating condition and seal the gap (18, 19) which exists in the cold condition.

3. An exhaust gas purifying device according to claim 1, characterised in that the monliths (8, 9) abut with their end faces the end face stamping face of the lining funnels (12, 13) in the cold, non-operating condition and the lining funnels work themselves into the monoliths (8, 9) by the amount L of heat expansion, forming an almost gas-tight joint between the lining funnels (12, 13) and the monoliths (8, 9) at operating temperature.

4. An exhaust gas purifying device according to one of claims 1 to 3, characterised in that the lining funnels (12, 13) consisting of ferritic or austenitic steel are welded to the housing (2) of the exhaust gas purifying device (1) in the region of the outer ends (14, 15).

5. An exhaust gas purifying device according to one of claims 1 to 4, characterised in that the support rings are made of ceramics and abut the end faces of the ceramic bodies (8, 9) adjacent thereto.

6. An exhaust gas purifying device according to claim 1 or 5, characterised in that the lining funnels are made of ceramic material and their end faces directly abut the monoliths.

7. An exhaust gas purifying device according to one of claims 1 to 6, characterised in that at least one of the shielding funnels, in particular the entry lining funnel, is provided with a catalytic coating.

8. An exhaust gas purifying device according to claim 6 or 7, characterised in that the free ends of the lining funnels lie freely in the outer housing in the current shadow of the outer housing or of the connecting tubes.

9. An exhaust gas purifying device according to one of claims 1 to 8, characterised in that the lining funnels (12, 13) are stepped at their impact edges and partially engage round the respective ceramic body (8, 9).

10. An exhaust gas purifying device according to one of claims 1 to 9, characterised in that the ceramic shielding bodies have a wall thickness of between 2 and 6 mm.

11. An exhaust gas purifying device, in particular according to one of claims 1 to 10, characterised in that the entrance lining funnel is formed as an exponential funnel for the purpose of even end-face actuation of the ceramic body with exhaust gas and/or is provided with current conducting bodies.

12. An exhaust gas purifying device according to claim 11, characterised in that the current conducting body has a plurality of conducting walls (44, 45), which in the inlet and outlet faces of the lining funnel (12") define changing segments (46, 47, 48) according to the change in cross-section of the said funnel.

13. An exhaust gas purifying device according to one of claims 1 to 12, characterised in that the central segment of the outer housing (3) and the ceramic bodies (8, 9) have an oval cross-section and in that the exhaust gas inlet and outlet nozzles (4, 5) and the lining funnels (12, 13) have a cross-section which changes from a circular entrance cross-section to an enlarged oval internal cross-section.

14. An exhaust gas purifying device according to one of claims 1 to 13, characterised by a constant gap width between the lining funnels or ceramic bodies and the housing.

## Revendications

1. Dispositif d'épuration des gaz d'échappement pour véhicules automobiles, comportant au moins un corps céramique monolithique (8, 9) possédant une structure en nid d'abeilles et placé dans un boîtier métallique (2) comportant des tubulures frontales (4, 5) d'arrivée et d'évacuation des gaz d'échappement, et un mat élastique (11) thermiquement isolant, qui est disposé entre les corps céramiques (8, 9) et le boîtier extérieur (2) et est protégé, au niveau des tubulures (4, 5) d'arrivée et d'évacuation des gaz d'échappement et au niveau des intervalles s'étendant entre les corps céramiques (8, 9), par un revêtement (12, 13, 20), qui résiste aux températures élevées et qui, au moins dans la zone des tubulures (4, 5) d'amenée et d'évacuation des gaz d'échappement, est distant axialement des surfaces frontales des corps céramiques (8, 9), caractérisé par le fait que le mat élastique (11), qui est constitué par de la laine de silicate d'aluminium, dans laquelle est insérée du mica gonflant (vermiculite), et sert à supporter, d'une manière atténuant les chocs et les bruits et réalisant une protection thermique, les corps céramiques monolithiques (8, 9) et les entonnoirs d'habillage (12, 13) dans les tubulures coniques (4, 5) de guidage des gaz d'échappement, s'étend continûment sur toute la longueur du boîtier métallique (2).

2. Dispositif d'épuration des gaz d'échappement suivant la revendication 1, caractérisé par le fait que la distance (18, 19) de montage existant entre les corps céramiques monolithiques (8, 9) et les entonnoirs d'habillage (12, 13) est dimensionnée de manière que, lorsque le dispositif fonctionne, les entonnoirs d'habillage (12, 13) s'appliquent contre les faces frontales des corps monolithiques (8, 9) et ferment l'espace intercalaire (18, 19) présent à froid.

3. Dispositif d'épuration des gaz d'échappement selon la revendication 1, caractérisé en ce qu'à l'état froid, lorsque le dispositif ne fonctionne pas, les corps monolithiques (8, 9) s'appliquent, par leurs faces frontales, contre la surface frontale d'appui des entonnoirs d'habillage (12, 13) et que ces derniers pénètrent, sur la distance L correspondant à la dilatation thermique, dans les corps monolithiques (8, 9) ce qui établit une liaison, presque étanche aux gaz, entre les entonnoirs d'habillage (12, 13) et les corps monolithiques (8, 9) à la température de fonctionnement.

4. Dispositif d'épuration des gaz d'échappement selon l'une des revendications 1 à 3, caractérisé en ce que les entonnoirs d'habillage (12, 13) réalisés en un acier ferritique ou austénitique sont soudés, au niveau des extrémités extérieures (14, 15), au boîtier (2) du dispositif (1) d'épuration des gaz d'échappement.

5. Dispositif d'épuration des gaz d'échappement selon l'une des revendications 1 à 4, caractérisé en ce que les anneaux de support sont réalisées en céramique et s'appliquent contre les surfaces frontales des corps céramiques (8, 9), qui sont voisins de ces bagues.

6. Dispositif d'épuration des gaz d'échappement selon la revendication 1 ou 5, caractérisé en ce que les entonnoirs d'habillage sont réalisés en un matériau céramique et s'appliquent, par leurs faces frontales, directement contre les corps monolithiques.

7. Dispositif d'épuration des gaz d'échappement selon l'une des revendication 1 à 6, caractérisé en ce qu'au moins l'un des entonnoirs de protection, notamment l'entonnoir d'habillage d'entrée, comporte un revêtement catalytique.

8. Dispositif des gaz d'échappement selon la revendication 6 ou 7, caractérisé en ce que les entonnoirs d'habillage s'appliquent librement, au niveau des extrémités extérieures, dans le boîtier extérieur, dans la zone d'occulation de l'écoulement du boîtier extérieur ou des tuyaux de raccordement.

9. Dispositif d'épuration des gaz d'échappement selon l'une des revendications 1 à 8, caractérisé en ce que les entonnoirs d'habillage (12, 13) possèdent une partie étagée au niveau de leurs bords d'appui et entourent partiellement le corps céramique respectif (8, 9).

10. Dispositif d'épuration des gaz d'échappement selon l'une des revendications 1 à 9, caractérisé par le fait que les corps céramiques de protection possèdent une épaisseur de paroi comprise entre 2 et 6 mm.

11. Dispositif d'épuration des gaz d'échappement, notamment selon l'une des revendications 1 à 10, caractérisé en ce que l'entonnoir d'habillage d'entrée est agencé sous la forme d'un entonnoir à profil exponentiel, afin de permettre une charge frontale uniforme du corps céramique avec les gaz d'échappement et/ou comporte des corps internes guidant l'écoulement.

12. Dispositif d'épuration des gaz d'échappement selon la revendication 11, caractérisé en ce que le corps guidant l'écoulement comporte une multiplicité de chicanes (44, 45), qui délimitent, dans les surfaces d'entrée et de sortie de l'entonnoir d'habillage (12"), des passages (46, 47, 48), qui varient d'une manière correspondant à la variation de la section transversale de l'entonnoir.

13. Dispositif d'épuration des gaz d'échappement selon l'une des revendications 1 à 12, caractérisé en ce que la section médiane du boîtier extérieur (3) et les corps céramiques (8, 9) possèdent une section transversale ovale et que les tubulures (4, 5) d'amenée et d'évacuation des gaz d'échappement et les entonnoirs d'habillage (12, 13) possèdent une section transversale, qui varie depuis une ouverture circulaire d'entrée jusqu'à une ouverture intérieure ovale de taille accrue.

14. Dispositif d'épuration des gaz d'échappement selon l'une des revendications 1 à 13, caractérisé en ce que la fente présente entre les entonnoirs d'habillage ou les corps céramiques et le boîtier possède une largeur constante.

FIG. 1

FIG. 2

EP 0 256 416 B1

FIG. 3

EP 0 256 416 B1

FIG. 4

FIG. 5

FIG. 6

FIG. 7

FIG. 8

FIG. 9